# EUROPÄISCHE PATENTSCHRIFT

(11) **EP 1 986 880 B1**
(45) Veröffentlichungstag und Bekanntmachung des Hinweises auf die Patenterteilung: **09.04.2014**
(21) Anmeldenummer: 07726333.3
(22) Anmeldetag: 12.02.2007
(51) Int. Cl.: B60K 17/16, F16H 48/30

(54) **DIFFERENZIAL MIT PLANETENTRIEB**
DIFFERENTIAL WITH PLANETARY GEARING
DIFFÉRENTIEL AVEC ENGRENAGE PLANÉTAIRE

(30) Priorität: 17.02.2006 DE 102006007351
(43) Veröffentlichungstag der Anmeldung: 05.11.2008
(73) Patentinhaber: Schaeffler Technologies GmbH & Co. KG, 91074 Herzogenaurach (DE)
(72) Erfinder: BIERMANN, Thorsten, 96172 Mühlhausen (DE)
(86) Internationale Anmeldenummer: PCT/EP2007/051310
(87) Internationale Veröffentlichungsnummer: WO 2007/093568

(56) Entgegenhaltungen:
- WO-A-99/17948
- FR-A- 364 767
- FR-A1- 2 864 190
- JP-A- 9 309 357
- JP-A- 11 315 905
- US-A- 311 132
- US-A- 6 120 407
- US-A1- 2004 058 774
- US-A1- 2004 147 356
- US-A1- 2005 266 952
- HOEHN B-R ET AL: "KOMPAKTES ACHSGETRIEBE FUER FAHRZEUGE MIT FRONTANTRIEB UND QUER EINGEBAUTEM MOTOR" Januar 2006 (2006-01), ATZ AUTOMOBILTECHNISCHE ZEITSCHRIFT, VIEWEG PUBLISHING, WIESBADEN, DE, PAGE(S) 46-51 , XP001238419 ISSN: 0001-2785 in der Anmeldung erwähnt das ganze Dokument

## Beschreibung

### Gebiet der Erfindung

Die Erfindung betrifft ein Differenzial mit einem Planetentrieb, der einen Planetenträger als Summenwelle und zwei Differenzwellen aufweist, wobei an dem Planetenträger zumindest ein erster Satz Planetenräder sowie ein zweiter Satz Planetenräder drehbar gelagert sind und dabei Planetenräder des ersten Satzes in Planetenräder des zweiten Satzes eingreifen sowie Planetenräder des ersten Satzes mit der ersten Differenzwelle im Eingriff sind und Planetenräder des zweiten Satzes mit der zweiten Differenzwelle im Eingriff stehen.

### Hintergrund der Erfindung

Die am umlaufenden Planetenträger (Steg) auf Planetenbolzen drehbar gelagerten Planetenräder führen um die Zentralachse eine planetenartige Bewegung aus. Bei der planetenartigen Bewegung laufen die Planetenräder des umlaufenden Planetenträgers mit den Bolzen auf einer Kreisbahn um die Zentralachse. Dabei drehen die Planeten*räder* entweder auf dem Planetenbolzen oder nicht. Es ist auch möglich, dass die Planetenräder des nicht umlaufenden Planetenträgers auf dem Bolzen rotieren.

Der Planetenträger ist in dem Differenzial der gattungsbildenden Art die Summenwelle des Planetentriebs. Die Summenwelle ist nach dem Verständnis des Fachmanns diejenige Welle eines Planetentriebs, die jeweils das größte Drehmoment bzw. die größten Drehmomente führt. Dieses Eingangs- bzw. Antriebsdrehmoment wird in dem Differenzial auf die beiden Differenzwellen des Planetentriebs verteilt.

Ein derartiges gattungsgemäßen Differenzial ist in einem Fachaufsatz der ATZ 01/2006 "Kompaktes Achsgetriebe für Fahrzeuge mit Frontantrieb und quer eingebautem Motor" der Autoren Höhn/Michaelis/Heizenröther beschrieben. Die Planeten eines Paares stehen in diesem Differenzial jeweils mit der halben Zahnbreite miteinander im Eingriff. Die Planeten kämmen mit innenverzahnten Hohlrädern. Jedes der Hohlräder ist mit einer in diesem Fall als Achswelle bezeichneten Differenzwelle verbunden.

Drehmomente werden über ein Antriebsrad in den Planetenträger eingeleitet. Das Antriebrad kämmt dazu beispielsweise mit einem Abtriebsritzel eines Getriebes. Die Planetenräder leiten und verteilen die Drehmomente an die Hohlräder und damit an die Differenzwellen.

Während einer Kurvenfahrt dreht sich die kurvenäußere Differenzwelle schneller als die kurveninnere Differenzwelle. Die dadurch entstehende Differenzdrehzahl zwischen den beiden Wellen wird durch Drehung der Planetenräder ausgeglichen.

In dem zuvor genannten Fachartikel beschriebene Stirnraddifferenzial werden die Drehmomente auf relativ große Durchmesser übertragen, so dass bei gleicher Beaufschlagung geringere Bauteilbeanspruchungen auftreten, als beispielsweise beim klassischen Kegelraddifferenzial. Dieser Typ eines Differenzials ist einerseits deshalb höher belastbar als ein Kegelraddifferenzial, das gleichen Bauraum beansprucht. Andererseits ist bei gleichen übertragbaren Drehmomenten der Bedarf an Bauraum für ein Stirnraddifferenzial geringer als der für ein Kegelraddifferenzial. Die zuletzt genannte Tatsache favorisiert den Einsatz derartiger Stirnraddifferenziale in angetriebenen Vorderachsen, da dort relativ wenig Bauraum für Differenziale zur Verfügung steht.

Die Antriebsleistung sollte unabhängig von der Fahrbahnsituation von den angetriebenen Fahrzeugrädern optimal auf die angetriebenen Räder oder in Vierradantrieben auf die Achsen verteilt und auf die Fahrbahn gebracht werden. Hinsichtlich der Leistungs- bzw. Drehmomentverteilung kann zwischen passiven und aktiven Systemen unterschieden werden. In passiven Systemen wird das Drehmoment bei Drehzahldifferenzen zwischen den Differenzwellen "selbstregelnd" durch die Ausgleichbewegungen beispielsweise der Planeten verteilt. In aktiven Systemen werden geeignete Glieder des Planetentriebs durch geeignete Mittel wie Kupplungen oder Bremsen gezielt abgebremst und ein Momentfluss erzwungen geregelt. Derartige Regelprozesse sind oft nachteilig mit Leistungsverlusten durch Abbremsen verbunden.

JP11315905 *beschreibt ein Differenzial, das einen Träger als Summenwelle und zwei Differenzwellen aufweist. An dem Träger ist zumindest ein Satz Räder drehbar gelagert. Die Räder des Satzes stehen mit einer Differenzwelle im Eingriff. Das Differenzial weist mindestens einen Planetenträger mit zumindest einem Satz drehbar gelagerter Planetenräder auf. Der Träger und der Planetenträger weisen eine gemeinsame Achse auf, die Zentralachse des Differenzials ist. Einige Planetenräder und eine der Differenzwellen stehen miteinander im Zahneingriff. Der Planetenträger ist relativ zu einer der um die Zentralachse rotierbaren Differenzwellen zumindest drehzahlregulierbar.*

### Zusammenfassung der Erfindung

Die Anforderungen an Antriebsstränge hinsichtlich Energieeffizienz und damit an immer geringeren Kraftstoffverbrauch für moderne Kraftfahrzeuge sind hoch, so dass nach Wegen derartige Leistungsverluste zu minimieren gesucht wird. Die Aufgabe der Erfindung ist es daher ein Differenzial zu schaffen, dass die zuvor genannten Nachteile nicht aufweist.

Diese Aufgabe ist dadurch gelöst, dass das Differenzial außer dem einfachen Planetentrieb aus Summenwelle, ersten und zweiten Planetensatz und aus den Differenzwellen, mindestens einen zweiten Planetenträger mit mindestens einem dritten Satz an dem zweiten Planetenträger drehbar gelagerter Planetenräder aufweist. Der zweite Planetenträger läuft wie der erste Planetenträger um die Zentralachse des Planetentriebs um. Die Planetenräder des dritten Satzes sind mit dem ersten Planetenträger so permanent oder zeitweise im Eingriff, dass zwischen dem ersten Planetenträger und dem zweiten Planetenträger über den dritten Satz Planetenräder Drehmomente übertragbar sind. Außerdem stehen die Planetenräder des dritten Satzes und eine der Differenzwellen zeitweise oder permanent im Eingriff, so dass auch zwischen dem zweiten Planetenträger und der jeweiligen Differenzwelle Drehmomente übertragbar sind. Der schaltbare zeitweise Eingriff ist beispielsweise durch eine Kupplung abgesichert.

Der zweite Planetenträger ist unabhängig von der Differenzwelle, mit der der dritte Planetensatz koppelbar oder gekoppelt ist, drehbar gelagert. Dazu ist der Planetenträger an beliebiger Stelle um die Zentralachse umlaufend z.B. neben der entsprechenden Differenzwelle oder auf einem Abschnitt der Differenzwelle angeordnet.

Wenn der zweite Planetenträger über den dritten Satz nicht permanent mit dem ersten Planetenträger im Eingriff ist, ist der erste Planetenträger schaltbar beispielsweise über eine Kupplung mit dem ersten Planetenträger zeitweise gewollt koppelbar.

Gleichzeitig ist vorgesehen, dass der umlaufende zweite Planetenträger durch gezielte Fremdeinwirkung relativ zu einer der Differenzwellen im Differenzial oder an der Umgebung des Differenzials antreibbar, abbremsbar bzw. festlegbar ist. Der zweite Planetenträger ist beispielsweise durch Band- oder Lamellenkupplungen oder auf andere geeignete Weise abbrems- und/oder feststellbar oder durch Leistungsverzweigung des vorgeschalteten Antriebs bzw durch einen separaten Elektromotor, Verbrennungsmotor, hydraulischen Antrieb oder andere Antriebe antreibbar.

Durch die erfindungsgemäße Gestaltung sind grob unterteilt vier vom Stillstand abweichende Betriebzustände im Fahrzustand erzielbar:
- der dritte Planetensatz ist mit dem einfachen Planetentrieb gekoppelt oder nicht gekoppelt, jedoch nicht durch gezielte Fremdeinwirkung abgebremst bzw. festgelegt. Der einfache und nicht gesperrte Planetentrieb gleicht bei Kurvenfahrt selbstregelnd aus.
- der dritte Planetensatz ist mit dem einfachen Planetentriebs durch Schalten oder permanent gekoppelt und bei Kurvenfahrt abgebremst. Die selbstregelnde Wirkung des einfachen Planetentriebs ist durch Zuschalten des zweiten Planetenträgers mit dem dritten Satz Planetenräder und durch dessen Einfluss auf die Differenzwelle und den ersten Planetenträger durch gezielte Regelung aufgehoben.
- der dritte Planetensatz ist mit dem einfachen Planetentrieb durch Schalten oder permanent gekoppelt und bei Geradeausfahrt abgebremst. Die selbstregelnde Wirkung des einfachen Planetentriebs ist durch Zuschalten des zweiten Planetenträgers mit dem Einfluss des dritten Satzes Planetenräder auf die Differenzwelle und auf den ersten Planetenträger durch gezielte Regelung aufgehoben. Vorstellbar sind Betriebszustände, in denen ein Rad oder die Räder einer angetriebenen Achse durchdrehen. Der Einsatz des Differenzials ist auch in Verteilergetrieben zwischen angetriebenen Achsen denkbar - zum Beispiel wenn die Räder einer angetriebenen Achse durchdrehen oder wenn bewusst eine unsymmetrische Momentverteilung zwischen den Achsen erzielt und geregelt werden soll.
- Der dritte Planetensatz ist mit dem einfachen Planetentrieb permanent oder durch Schalten gekoppelt und mittels einer Kupplung oder Bremse zur drehfesten Umgebung des Differenzials festgehalten. Die selbstregelnde Wirkung des Differenzials auf die Differenzwelle, mit der der dritte Planetensatz im Eingriff steht, ist gesperrt.
- der dritte Planetensatz ist mit dem einfachen Planetentrieb durch Schalten oder permanent gekoppelt und bei Geradeausfahrt oder Kurvenfahrt durch einen Antrieb angetrieben, so dass zusätzlich Leistung in das Differenzial eingebracht wird.

Eine Ausgestaltung der Erfindung sieht einen weiteren zweiten Planetenträger mit einem weiteren dritten Satz Planetenräder vor. Jeder der Planetenträger mit mindestens einem dritten Satz ist einer der Differenzwellen des Differenzials zugeordnet. Jede der Differenzwellen ist somit zeitgleich oder zeitunäbhängig von der anderen Differenzwelle mit einer geeigneten Bremse bzw. Kupplung abbremsbar bzw: festlegbar, so dass gezielt an Fahrzustände angepasste Drehzahl und Momentverteilungen vorgenommen werden können.

Durch die Erfindung ist es möglich, regelbare Differenziale herzustellen, die in Verbindung mit aktiver Antriebs- und oder Fahrwerksregelungen moderner Fahrzeuge eingesetzt werden können, die wenig Bauraum beanspruchen und deshalb auch besonders für den Einbau in angetriebene Vorderachsen geeignet sind, in denen die Leistungsverluste gering gehalten sind und deren Einzelteile sich einfach herstellen und unkompliziert zu dem Differenzial zusammen montieren lassen. Die Montage und sowie der logistische Aufwand wie Lagerung und Transport ist vereinfacht, wenn, wie eine Ausgestaltung der Erfindung vorsieht, die Planetenräder, vorzugsweise aller drei Sätze, gleicher Bauart und gleicher Abmessung sind.

Der Planetenträger des einfachen Planetentriebs ist, wie anfangs erwähnt, die Summenwelle, an der die höchsten Momente anliegen. Dieses sind in der Regel Antriebmomente, die 1:1 oder mit geeigneten Mitteln über- oder untersetzt vom Antrieb oder von einem Getriebe in geeigneter Weise, beispielsweise durch Riemen, Kette oder andere Übertragungsmittel direkt oder über Kupplungselemente auf den ersten Planetenträger übertragen werden. Eine Ausgestaltung der Erfindung sieht vor, dass der erste Planetenträger eine Stirnverzahnung aufweist, die Eingangsglied für in den Planetentrieb eingeleitete Antriebsdrehmomente ist.

Eine weitere Ausgestaltung der Erfindung ist auf besonders Bauraum sparende Bauweise gerichtet und sieht vor, dass Planetenräder des ersten Satzes von einer Seite des ersten Planetenträgers und dabei durch den ersten Planetenträger hindurch in Planetenräder des zweiten Satzes eingreifen.

Eine Ausgestaltung der Erfindung sieht vor, dass vorzugsweise alle Planetenräder des ersten und des zweiten Planetensatzes Stirnräder sind und dass Planetenräder des ersten Satzes und des zweiten Satzes jeweils mit der ersten bzw. zweiten Differenzwelle über jeweils ein Hohlrad in Verbindung stehen. Das Hohlrad umgreift den entsprechenden Planetensatz außen und weist eine Innenverzahnung auf. Das Hohlrad und die Planetensätze stehen permanent oder zuschaltbar im Eingriff, in dem die Innenverzahnung radial von außen nach innen zwischen radial von innen nach außen gerichtete Zähne der Planeten greift.

### Detaillierte Beschreibung der Zeichnung

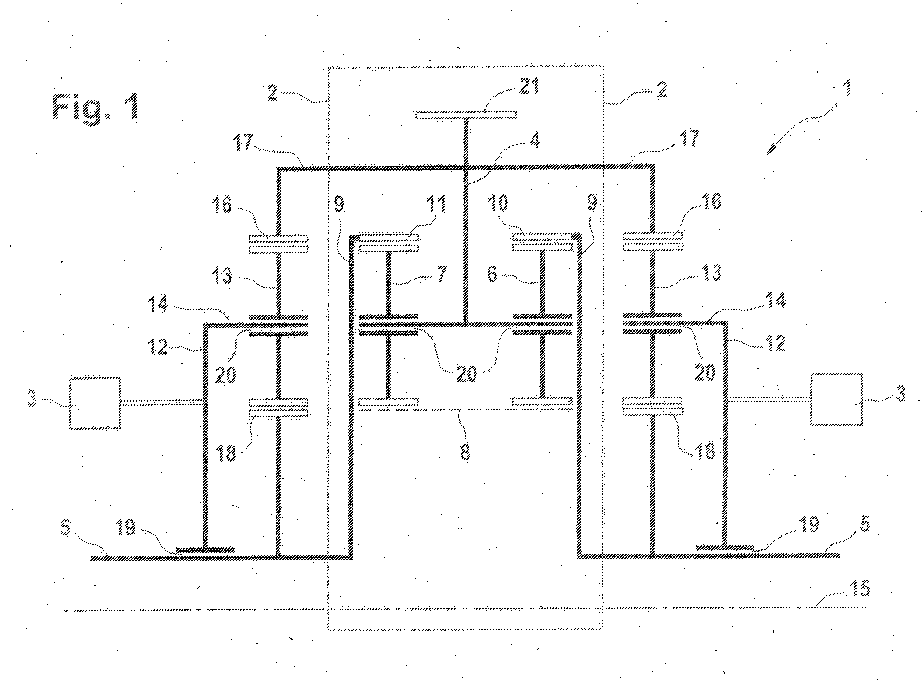

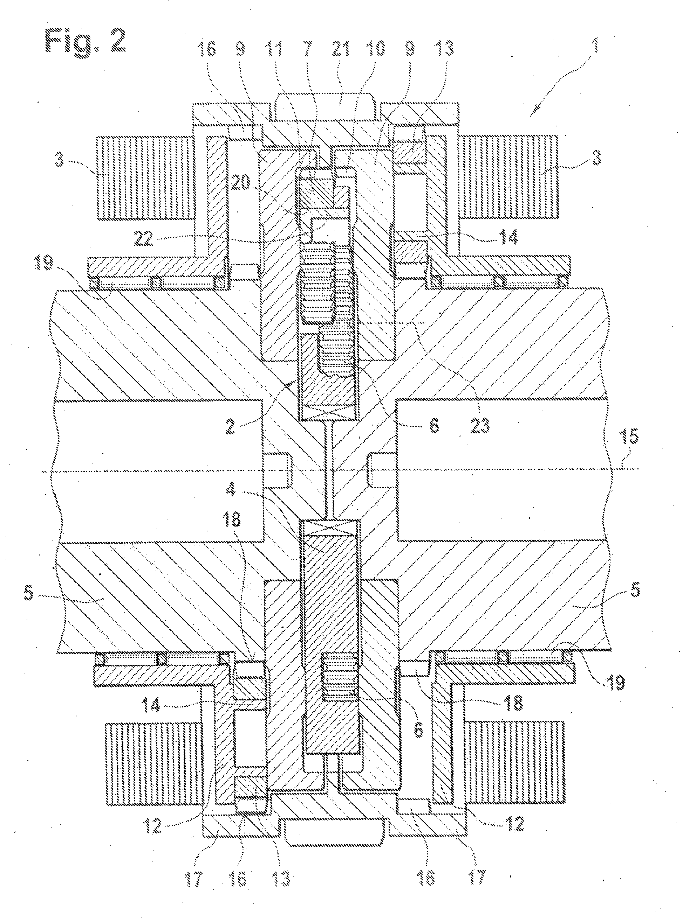

Die Erfindung wird nachfolgend anhand eines Ausführungsbeispiels näher erläutert, das in Figur 1 stark vereinfacht symbolisiert und in Figur 2 in einer konkreten Ausführung mit einem Teilschnitt dargestellt ist.

Ein Differenzial 1 ist zumindest aus einem einfachen Planetentrieb 2 und aus zwei Drehzahlstellgliedern 3 gebildet. Der einfache Planetentrieb 2 weist einen (ersten) Planetenträger 4 als Summenwelle und zwei Differenzwellen 5 auf. Der Planetenträger 4 ist Leistungseingang und weist als Eingangsglied dafür eine Stirnverzahnung 21 auf. Die Differenzwellen 5 sind die Abtriebswellen, die jeweils mit einer nicht dargestellten Gelenkwelle zum Antrieb von Vorderrädern eines Kraftfahrzeugs verbunden sind. Alternativ dazu ist das Differenzial zum Antrieb von Hinterrädern oder zum Verteilen von Leistungsflüssen auf Vorder- und Hinterachsen vorgesehen.

An dem Planetenträger 4 ist ein erster Satz Planetenräder 6 sowie ein zweiter Satz Planetenräder 7 drehbar auf Wälz- bzw. Gleitlagerungen 20 gelagert. Wie in Figur 1 mit der gestrichelten Linie 8 symbolisiert ist, kämmt jeweils eines der Planetenräder 6 des ersten Satzes mit einem anderen der Planetenräder 7 des zweiten Satzes. Die Planetenräder 6 und 7 sind Stirnräder und stehen jeweils vorzugsweise mit der Hälfte der Zahnbreite, zum Beispiel durch den Planetenträger 4 hindurch, miteinander im Eingriff. In Figur 2 ist eines der Planetenräder 7 teilweise geschnitten auf einem hohlen Planetenbolzen 22 dargestellt, das mit einem Planetenrad 6 kämmt. Das Planetenrad 6 ist hinter dem Planetenrad 7 versetzt angeordnet und läuft auf einem Planetenbolzen, von dem nur die Längsmittelachse 23 sichtbar dargestellt ist. Um das Planetenrad 6 in der Bildebene sichtbar zu machen, wurde der Planetenträger 4 an geeigneter Stelle durchbrochen dargestellt.

Jede der Differenzwellen 5 geht in ein Hohlrad 9 über, das innen eine Innenverzahnung 10 bzw. 11 aufweist. Die Innenverzahnung 10 steht mit den Planetenrädern 6 und die Innenverzahnung 11 mit den Planetenrädern 7 permanent im Eingriff. Die Innenverzahnungen 10 und 11 sind typgleich und vorzugsweise abmessungsgleich, können sich jedoch auch unterscheiden. Es ist auch denkbar, dass der Eingriff schaltbar ist.

Das Differenzial 1 weist außer dem einfachen Planetentrieb 2 noch zwei weitere als Gleichteile zueinander ausgebildete (zweite) Planetenträger 12 mit jeweils zumindest einem dritten Satz drehbar gelagerter Planetenräder 13 auf. Jeder der Planetenträger 12 ist ein Blechformteil, an dem stummelartige und einteilig mit dem Blech des Planetenträgers 13 ausgebildete napfartige Planetenbolzen 14 ausgebildet sind. Auf jedem der Planetenbolzen 14 ist eines der Planetenräder 13 mittels einer Wälz- oder Gleitlagerung 20 drehbar gelagert. Die Planetenräder 6, 7 und 13 sind typ- und abmessungsgleiche Stirnräder, können sich jedoch auch unterscheiden.

Der Planetenträger 4 und die Planetenträger 12 laufen im Fahrbetrieb um die gleiche Zentralachse 15 des Differenzials mit Differenzdrehzahlen oder mit gleicher Drehzahl um, sind deshalb unabhängig voneinander um eine gemeinsame Zentralachse 15 drehbar gelagert. Die Planetenträger 12 sind konzentrisch zu der jeweiligen Differenzwelle 5 mittels eines Wälzlagers 19 oder eines Gleitlagers auf der Differenzwelle 5 gelagert.

Die Planetenräder 13 jedes dritten Satzes stehen im Eingriff mit jeweils einer Innenverzahnung 16 an einem zylindrischen Abschnitt 17 des Planetenträgers 4. Die Innenverzahnung 16 umgreift die Planeten 13 und ist mit der Innenverzahnungen 10 und/oder 11 an den Hohlrädern 9 typ- und abmessungsgleich - alternativ unterscheiden sich diese. Die Planetenräder 13 eines dritten Satzes umgreifen jeweils eine Stirnverzahnung 18 an einer der Differenzwellen 5 und greifen in diese ein. Die Stirnverzahnung 18 ist an der jeweiligen der Differenzwellen 5 fest oder, mit dem Satz Planeten 13 koppelbar, auf dieser axial verschiebbar aber drehmomentfest.

Jeder der Planetenträger 12 ist mittels eines Drehzahlstellgliedes 3 des Differenzials 1 unabhängig von dem anderen Planetenträger 12 zeitgleich oder zeitversetzt zu dem anderen Planetenträger 12 drehzahlregelbar. Das Drehzahlstellglied 3 kann eine Kupplung, eine Bremse oder ein Antrieb sein, mit der/dem jeder Planetenträger 12 relativ zu einer der um die Zentralachse 15 rotierbaren der Differenzwellen 5 bremsbar, feststellbar oder antreibbar ist.

### Bezugszeichen

- 1: Differenzial
- 2: Planetentrieb
- 3: Drehzahlstellglied
- 4: Planetenträger
- 5: Differenzwelle
- 6: Planetenrad
- 7: Planetenrad
- 8: Linie
- 9: Hohlrad
- 10: Innenverzahnung
- 11: Innenverzahnung
- 12: Planetenträger
- 13: Planetenrad
- 14: Planetenbolzen
- 15: Zentralachse
- 16: Innenverzahnung
- 17: zylindrischer Abschnitt
- 18: Stirnverzahnung
- 19: Wälzlager
- 20: Wälz- oder Gleitlagerung
- 21: Stirnverzahnung
- 22: Planetenbolzen
- 23: Längsmittelachse

## Patentansprüche

1. Differenzial (1) mit einem Planetentrieb (2), der einen ersten Planetenträger (4) als Summenwelle und zwei Differenzwellen (5) aufweist, wobei an dem ersten Planetenträger (4) zumindest ein erster Satz Planetenräder (6) sowie ein zweiter Satz Planetenräder (7) drehbar gelagert sind wobei die Planetenräder (6, 7) des ersten und zweiten Satzes Stirnräder sind, und dabei Planetenräder (6) des ersten Satzes in Planetenräder (7) des zweiten Satzes eingreifen sowie Planetenräder (6) des ersten Satzes mit der ersten Differenzwelle (5) im Eingriff sind und Planetenräder (7) des zweiten Satzes mit der zweiten Differenzwelle (5) im Eingriff stehen, **dadurch gekennzeichnet, dass** das Differenzial (1) mindestens einen zweiten Planetenträger (12) mit zumindest einem dritten Satz drehbar gelagerter Planetenräder (13) aufweist, wobei der zweite Planetenträger (12) und erste Planetenträger (4) die gleiche Zentralachse (15) des Differenzials (1) aufweisen und dabei *die* Planetenräder (13) des dritten Satzes mit dem ersten Planetenträger (4) im Eingriff sind sowie *die* Planetenräder (13) des dritten Satzes und eine der Differenzwellen (5) im Eingriff stehen und dass der zweite Planetenträger (12) relativ zu einer der um die Zentralachse (15) rotierbaren Differenzwellen (5) zumindest drehzahlregulierbar ist.

2. Differenzial nach Anspruch 1, dadurch gekenntzeichnet, dass das Differenzial (1) zwei der zweiten Planetenträger (12) aufweist, wobei jeder der zweiten Planetenträger (12) über Planetenräder (13) des dritten Planetensatzes jeweils mit einer anderen der Differenzwellen (5) im Eingriff steht.

3. Differenzial nach Anspruch 1, **dadurch gekennzeichnet, dass** der zweite Planetenträger (12) relativ zu einer der um die Zentralachse (15) rotierbaren Differenzwellen (5) zumindest zeitweise festsetzbar ist.

4. Differenzial nach Anspruch 1, **dadurch gekennzeichnet, dass** der zweite Planetenträger (12) mit einem Drehzahlstellglied (3) verbunden ist, wobei der zweite Planetenträger mittels des Drehzahlstellgliedes (3) relativ einer der Differenzwellen (5) zumindest drehzahlregulierbar ist.

5. Differenzial nach Anspruch 4, **dadurch gekennzeichnet, dass** der zweite Planetenträger (12) relativ zu einer der Differenzwellen (5) zumindest bremsbar ist.

6. Differenzial nach Anspruch 2, **dadurch gekennzeichnet**, das jeder der zweiten Planetenträger (12) unabhängig zu dem anderen zweiten Planetenträgers (12) relativ zu einer der Differenzwellen (5) zumindest drehzahlregulierbar ist.

7. Düferenzial nach Anspruch 1, **dadurch gekennzeichnet, dass** der erste Planetenträger (4) eine Stirnverzahnung (21) aufweist, die Eingangsglied für in den Planetentrieb (2) eingeleitete Antriebsdrehmomente ist.

8. Differenzial nach Anspruch 1, **dadurch gekennzeichnet, dass** die Planetenräder des ersten Planetensatzes (6) mit der ersten Differenzwelle (5) über eine Innenverzahnung (10) an einem ersten Hohlrad (9) im Eingriff sind und Planetenräder des zweiten Planetensatzes mit der zweiten Differenzwelle (5) über eine Innenverzahnung (11) an einem zweiten Hohlrad (9) im Eingriff stehen.

9. Differenzial nach Anspruch 1, **dadurch gekennzeichnet, dass** Planetenräder (13) des dritten Planetensatzes Stirnräder sind, wobei Planetenräder (13) des dritten Planetensatzes mit einer Stirnverzahnung (18) kämmen, wobei die Stirnverzahnung (18) einer der Differenzwellen (5) drehmomentfest zugeordnet ist.

10. Differenzial nach Anspruch 2, **dadurch gekennzeichnet, dass** Planetenräder (13) der dritten Planetensätze beider der zweiten Planetenträger (12) Stirnräder sind, wobei jeder dritte Planetensatz mit einer anderen Stirnverzahnung (18) kämmt, wobei jede der Stirnverzahnung (18) einer anderen der Differenzwellen (5) drehmomentfest zugeordnet ist.

11. Differenzial nach Anspruch 1, **dadurch gekennzeichnet, dass** der zweite Planetenträger (12) drehbar auf einer der Differenzwellen (5) gelagert ist.

12. Differenzial nach Anspruch 1, **dadurch gekennzeichnet, dass** der zweite Planetenträger (12) mittels wenigstens eines Wälzlagers (19) drehbar auf einer der Differenzwellen (5) gelagert ist.

13. Differenzial nach Anspruch 1, **dadurch gekennzeichnet, dass** zumindest die Planetenräder (13) des dritten Planetensatzes drehbar jeweils auf einem einteilig mit dem zweiten Planetenträger (12) aus Blech ausgebildeten und stummelartig von dem Planetenträger (12) abstehenden Planetenbolzen (14) gelagert sind.

14. Differenzial nach Anspruch 1, **dadurch gekennzeichnet**, der erste Planetenträger (12) eine Innenverzahnung (16) aufweist, wobei der erste Planetenträger (12) und der dritte Planetensatz über die Innenverzahnung (16) miteinander im Eingriff stehen.

15. Differenzial nach Anspruch 1 oder 2, **dadurch gekennzeichnet, dass** zumindest die Verzahnungsgeometrien der Planetenräder (6, 7, 13) aller der Planetensätze gleich sind.

## Claims

1. Differential (1) having a planetary gear (2) which has a first planetary carrier (4) as summing shaft and two differential shafts (5), at least a first set of planetary gears (6) and a second set of planetary gears (7) being mounted rotatably on the first planetary carrier (4), the planetary gears (6, 7) of the first and second set being spur gears, and planetary gears (6) of the first set engaging here into planetary gears (7) of the second set, and planetary gears (6) of the first set being in engagement with the first differential shaft (5) and planetary gears (7) of the second set being in engagement with the second differential shaft (5), **characterized in that** the differential (1) has at least one second planetary carrier (12) with at least one third set of rotatably mounted planetary gears (13), the second planetary carrier (12) and first planetary carriers (4) having the same central axis (15) of the differential (1), and the planetary gears (13) of the third set being in engagement here with the first planetary carrier (4), and the planetary gears (13) of the third set and one of the differential shafts (5) being in engagement, and **in that** at least the rotational speed of the second planetary carrier (12) can be regulated relative to one of the differential shafts (5) which can rotate about the central axis (15).

2. Differential according to Claim 1, **characterized in that** the differential (1) has two of the second planetary carriers (12), each of the second planetary carriers (12) being connected via planetary gears (13) of the third planetary set in each case to another of the differential shafts (5).

3. Differential according to Claim 1, **characterized in that** the second planetary carrier (12) can be fixed at least temporarily relative to one of the differential shafts (5) which can rotate about the central axis (15).

4. Differential according to Claim 1, **characterized in that** the second planetary carrier (12) is connected to a rotational-speed actuator element (3), it being possible at least for the rotational speed of the second planetary carrier to be regulated relative to one of the differential shafts (5) by means of the rotational-speed actuator element (3).

5. Differential according to Claim 4, **characterized in that** the second planetary carrier (12) can at least be braked relative to one of the differential shafts (5).

6. Differential according to Claim 2, **characterized in that** at least the rotational speed of each of the second planetary carriers (12) can be regulated relative to one of the differential shafts (5) independently with respect to the other second planetary carrier (12).

7. Differential according to Claim 1, **characterized in that** the first planetary carrier (4) has a spur toothing system (21) which is the input element for drive torques which are introduced into the planetary gear (2).

8. Differential according to Claim 1, **characterized in that** the planetary gears of the first planetary set (6) are in engagement with the first differential shaft (5) via an internal toothing system (10) on a first internal gear (9), and planetary gears of the second planetary set are in engagement with the second differential shaft (5) via an internal toothing system (11) on a second internal gear (9).

9. Differential according to Claim 1, **characterized in that** planetary gears (13) of the third planetary set are spur gears, planetary gears (13) of the third planetary set meshing with a spur toothing system (18), the spur toothing system (18) being assigned to one of the differential shafts (5) fixedly in terms of torque.

10. Differential according to Claim 2, **characterized in that** planetary gears (13) of the third planetary sets of both of the two planetary carriers (12) are spur gears, each third planetary set meshing with another spur toothing system (18), each of the spur toothing systems (18) being assigned to another of the differential shafts (5) fixedly in terms of torque.

11. Differential according to Claim 1, **characterized in that** the second planetary carrier (12) is mounted rotatably on one of the differential shafts (5).

12. Differential according to Claim 1, **characterized in that** the second planetary carrier (12) is mounted rotatably on one of the differential shafts (5) by means of at least one anti-friction bearing (19).

13. Differential according to Claim 1, **characterized in that** at least the planetary gears (13) of the third planetary set are mounted rotatably in each case on a planet journal (14) which is configured from sheet metal in one piece with the second planetary carrier (12) and projects in a stub-like manner from the planetary carrier (12).

14. Differential according to Claim 1, **characterized in that** the first planetary carrier (12) has an internal toothing system (16), the first planetary carrier (12) and the third planetary set being in engagement with one another via the internal toothing system (16).

15. Differential according to Claim 1 or 2, **characterized in that** at least the toothing geometries of the planetary gears (6, 7, 13) of all of the planetary sets are identical.

## Revendications

1. Différentiel (1) avec engrenage planétaire (2), qui présente un premier porte-satellites (4) en tant qu'arbre additionneur et deux arbres de différentiel (5), au moins un premier train de satellites (6) ainsi qu'un deuxième train de satellites (7) étant montés de manière rotative sur le premier porte-satellites (4), les satellites (6, 7) du premier et du deuxième train étant des pignons droits, et des satellites (6) du premier train venant en prise dans des satellites (7) du deuxième train et des satellites (6) du premier train étant en prise avec le premier arbre de différentiel (5) et des satellites (7) du deuxième train étant en prise avec le deuxième arbre de différentiel (5), **caractérisé en ce que** le différentiel (1) présente au moins un deuxième porte-satellites (12) avec au moins un troisième train de satellites (13) montés de manière rotative, le deuxième porte-satellites (12) et le premier porte-satellites (4) présentant le même axe central (15) du différentiel (1) et les satellites (13) du troisième train étant en prise avec le premier porte-satellites (4) et les satellites (13) du troisième train et l'un des arbres de différentiel (5) étant en prise, et **en ce que** le deuxième porte-satellites (12) peut être régulé au moins en régime par rapport à l'un des arbres de différentiel (5) pouvant tourner autour de l'axe central (15).

2. Différentiel selon la revendication 1, **caractérisé en ce que** le différentiel (1) présente deux des deuxièmes porte-satellites (12), chacun des deuxièmes porte-satellites (12) étant en prise par le biais de satellites (13) du troisième train planétaire avec à chaque fois un autre des arbres de différentiel (5).

3. Différentiel selon la revendication 1, **caractérisé en ce que** le deuxième porte-satellites (12) peut être fixé au moins temporairement par rapport à l'un des arbres de différentiel (5) pouvant tourner autour de l'axe central (15).

4. Différentiel selon la revendication 1, **caractérisé en ce que** le deuxième porte-satellites (12) est connecté à un organe de régulation de régime (3), le deuxième porte-satellites pouvant être régulé au moins en régime au moyen de l'organe de régulation de régime (3) par rapport à l'un des arbres de différentiel (5).

5. Différentiel selon la revendication 4, **caractérisé en ce que** le deuxième porte-satellites (12) peut être au moins freiné par rapport à l'un des arbres de différentiel (5).

6. Différentiel selon la revendication 2, **caractérisé en ce que** chacun des deuxièmes porte-satellites (12) peut être régulé au moins en régime indépendamment de l'autre deuxième porte-satellites (12) par rapport à l'un des arbres de différentiel (5).

7. Différentiel selon la revendication 1, **caractérisé en ce que** le premier porte-satellites (4) présente une denture droite (21) qui est un organe d'entrée pour les couples d'entraînement introduits dans l'engrenage planétaire (2).

8. Différentiel selon la revendication 1, **caractérisé en ce que** les satellites du premier train planétaire (6) sont en prise avec le premier arbre de différentiel (5) par le biais d'une denture interne (10) au niveau d'une première couronne dentée (9), et des satellites du deuxième train planétaire sont en prise avec le deuxième arbre de différentiel (5) par le biais d'une denture interne (11) au niveau d'une deuxième couronne dentée (9).

9. Différentiel selon la revendication 1, **caractérisé en ce que** des satellites (13) du troisième train planétaire sont des pignons droits, des satellites (13) du troisième train planétaire s'engrenant avec une denture droite (18), la denture droite (18) étant associée de manière solidaire en couple à l'un des arbres de différentiel (5).

10. Différentiel selon la revendication 2, **caractérisé en ce que** des satellites (13) du troisième train planétaire des deux deuxièmes porte-satellites (12) sont des pignons droits, chaque troisième train planétaire s'engrenant avec une autre denture droite (18), chacune des dentures droites (18) étant associée de manière solidaire en couple à un autre des arbres de différentiel (5).

11. Différentiel selon la revendication 1, **caractérisé en ce que** le deuxième porte-satellites (12) est monté de manière rotative sur l'un des arbres de différentiel (5).

12. Différentiel selon la revendication 1, **caractérisé en ce que** le deuxième porte-satellites (12) est supporté au moyen d'au moins un palier à roulement (19) de manière rotative sur l'un des arbres de différentiel (5).

13. Différentiel selon la revendication 1, **caractérisé en ce qu'**au moins les satellites (13) du troisième train planétaire sont montés de manière rotative à chaque fois sur un axe planétaire (14) réalisé en tôle d'une seule pièce avec le deuxième porte-satellites (12) et faisant saillie à la manière d'un tronçon depuis le porte-satellites (12).

14. Différentiel selon la revendication 1, **caractérisé en ce que** le premier porte-satellites (12) présente une denture interne (16), le premier porte-satellites (12) et le troisième porte-satellites étant en prise l'un avec l'autre par le biais de la denture interne (16).

15. Différentiel selon la revendication 1 ou 2, **caractérisé en ce qu'**au moins les géométries des dentures des satellites (6, 7, 13) de tous les trains planétaires sont identiques.
